# EUROPÄISCHE PATENTSCHRIFT

(11) **EP 2 009 525 B1**
(45) Veröffentlichungstag und Bekanntmachung des Hinweises auf die Patenterteilung: **02.11.2011**
(21) Anmeldenummer: 08104497.6
(22) Anmeldetag: 20.06.2008
(51) Int. Cl.: G05B 19/042, G05B 17/00, G06F 17/50

(54) **Testvorrichtung zum Testen wenigstens eines elektronischen Steuerungssystems und Verfahren dazu**
Test device and method for testing at least one electronic control system
Procédé et dispositif pour tester au moins une unité de commande

(30) Priorität: 22.06.2007 DE 102007029285
(43) Veröffentlichungstag der Anmeldung: 31.12.2008
(73) Patentinhaber: dSPACE digital signal processing and control engineering GmbH, 33102 Paderborn (DE)
(72) Erfinder: Bruski, Nicola Dr., 33102 Paderborn (DE); Leinfellner, Robert, 33098 Paderborn (DE); Große Börger, Ralf, 33102 Paderborn (DE); Miller, Eduard, 33154 Salzkotten (DE); Wölfer, Thomas, 33098 Paderborn (DE)

(56) Entgegenhaltungen:
- EP-A- 1 898 282
- EP-A- 1 936 452
- WO-A-2005/091089
- US-B1- 6 766 514
- PARLE J ET AL: "Real-time digital simulation of electromagnetic transient phenomena in power transmission lines" 19971111; 19971111 - 19971114, Bd. 2, 11. November 1997 (1997-11-11), Seiten 563-568, XP006504535

## Beschreibung

Die Erfindung betrifft eine Testvorrichtung zum Testen wenigstens eines elektronischen Steuerungssystems, insbesondere eines Steuergeräts, das in der Fahrzeugtechnik, insbesondere in der Kraftfahrzeugtechnik Verwendung findet. Des Weiteren betrifft die Erfindung ein Verfahren zum Betreiben einer Testvorrichtung.

Die Testvorrichtung ist geeignet und eingerichtet über einen Datenkanal mit dem zu testenden Steuerungssystem in Verbindung gebracht zu werden. Außerdem kann auf der Testvorrichtung ein Umgebungsmodell berechnet und wenigstens ein Testmodell ausgeführt werden. Das Umgebungsmodell kann während der Ausführung durch Ausgabe von Umgebungsmodelldaten an das Steuerungssystem und durch Aufnahme von Steuerungssystemdaten aus dem Steuerungssystem über den Datenkanal mit dem Steuerungssystem in Wechselwirkung stehen. Das Testmodell kann zur Beeinflussung des Umgebungsmodells, zur Beeinflussung der Berechnung des Umgebungsmodells und/oder zur Beeinflussung des elektronischen Steuerungssystems ausgeführt werden. Dabei ist das Umgebungsmodell unter anderem durch Umgebungsmodellvariablen beschrieben, die an Speicherorten eines Speichers der Testvorrichtung unter festen, d. h. zur Laufzeit unveränderlichen physikalischen Adressen abgelegt sind. Die Testvorrichtung ist zur Änderung der Umgebungsmodellvariablen geeignet und eingerichtet.

Aus der europäischen Patentanmeldung mit der Anmeldungsnummer 06 018 945.3 ist eine Testvorrichtung bekannt, die die vorgenannten Eigenschaften hat. Außerdem sind Verfahren und Vorrichtungen zum Testen von elektronischen Steuerungssystemen aus der Praxis in verschiedener Form bekannt und werden vor allem in der angewandten Forschung und der industriellen Entwicklung bei der Entwicklung elektronischer Steuerungssysteme verwendet. Aus der US 6,766,514 sind ein Compiler und ein Compilierungsverfahren bekannt, wobei diese das Problem lösen, dass bei einem Programm, welches in einem Quellcode (FORTRAN-Quellcode) vorliegt, ein Zugang auf eine Variable des Programms, zwecks Modifizierung der Variable, hergestellt werden soll, ohne Änderungen an dem Quellcode vorzunehmen. Hierfür ist es allerdings erforderlich, dem aus dem Quellcode (FORTRAN) erzeugten Code des einen später auszuführenden Programms im Zuge der Compilierung zusätzlicher Code zu implantieren. Der Begriff "Steuerungssystem" wird in der vorliegenden Patenanmeldung als umfassende Bezeichnung für eine technische Einrichtung verwendet, die im Wesentlichen die Aufgaben des Messens, Steuerns, Regelns und Kalibrierens erfüllen können. Es handelt sich dabei in der Regel um ein elektronisches, steuerbares System, das im Bereich der Kraftfahrzeugtechnik üblicherweise "Steuergerät" genannt wird. Der Begriff "Steuerungssystem" ist nicht auf das beschränkt, was im systemtheoretischen Sinne einengend als Steuerung definiert wird. Vielmehr werden auch Regelungssysteme in der Praxis und in der Sprache dieser Patentanmeldung als Steuerungssysteme bezeichnet. Es sei insbesondere darauf verwiesen, dass im englischen Sprachgebrauch die systemtheoretische Unterscheidung zwischen einer Steuerung und einer Regelung, wie sie in den deutschen Normen gemacht wird, in aller Regel nicht erfolgt.

Im Zuge der Entwicklung von praxistauglichen und insbesondere auch serientauglichen Steuerungssystemen ist es erforderlich oder zumindest wünschenswert, dass das entwickelte Steuerungssystem zusammen mit dem realen zu steuernden beziehungsweise zu regelnden Prozess erprobt wird. Dazu können sogenannte "hardware in-the-loop"-Tests (HIL-Test) durchgeführt werden. Bei HIL-Tests mit der in der europäischen Patentanmeldung (die am Prioritätstag des vorliegenden Patentanmeldung noch unveröffentlicht war, womit diese ältere europäische Patentanmeldung unter Art. 54(3) EPÜ fällt und für die Betrachtung der erfinderischen Tätigkeit nicht von Bedeutung ist) mit der Anmeldenummer 06 018 945.3 beschriebenen Testvorrichtung wird das entwickelte Steuerungssystem mit einer Testvorrichtung verbunden. Auf der Testvorrichtung wird dann mit Hilfe eines Umgebungsmodells die funktionale Umgebung des zu testenden Steuerungssystems simuliert. Das Steuerungssystem tritt also mit einer virtuellen Umgebung in Wechselwirkung, indem das Umgebungsmodell, das über den Datenkanal mit dem Steuerungssystem in Verbindung steht, Umgebungsmodelldaten an das Steuerungssystem ausgibt und Steuerungssystemdaten aus dem Steuerungssystem aufnimmt. Beispiele für derartige HIL-Tests sind in der europäischen Patentanmeldung mit der Anmeldenummer 06 018 945.3 angegeben.

Der eigentliche Test des Steuerungssystems besteht darin, dass das Umgebungsmodell des Steuerungssystems in gezielter Weise durch das Testmodell, welches ebenfalls auf der Testvorrichtung abläuft, in gezielter Weise beeinflusst wird. War es in der Vergangenheit üblich, derartige Testmodelle auf einer separaten Vorrichtung ablaufen zu lassen, ist in der europäischen Patentanmeldung 06 018 945.3 erstmals offenbart, dass das Testmodell und das Umgebungsmodell auf der gleichen Vorrichtung, nämlich auf der Testvorrichtung ablaufen. Der Vorteil dieser in der europäischen Patentanmeldung mit der Anmeldenummer 06 018 945.3 erstmals beschriebenen technischen Lehre ist, dass eine Echtzeitfähigkeit der Tests ermöglicht wird.

Während es in der Vergangenheit üblich war, dass das Testmodell auf einer anderen als der Testvorrichtung, nämlich auf einer sogenannten Konfigurationsvorrichtung ablief, bei der eine Echtzeitlauffähigkeit nicht garantiert werden konnte, ist es mit der Testvorrichtung nach der europäischen Patentanmeldung mit der Anmeldenummer 06 018 945.3 nun möglich, ein zeitsynchrones Ablaufen des Testmodells und des Umgebungsmodells zu erreichen.

Dieser Vorteil der Echtzeitlauffähigkeit wurde jedoch mit einem Nachteil erkauft: Bei den bisher bekannten Testvorrichtungen beziehungsweise Anordnungen aus Testvorrichtungen und Konfigurationsvorrichtungen war es möglich, Parameter des Umgebungsmodells, nämlich sogenannte Umgebungsmodellvariablen während der Laufzeit des Umgebungsmodells und des Testmodells durch das Testmodell, d. h. von der Konfigurationsvorrichtung aus zu verändern. Das Testmodell konnte dazu unmittelbar auf die Umgebungsmodellvariablen zugreifen. Dieses war möglich, da dem Testmodell bekannt war, in welchen Speicherbereichen der Testvorrichtung die Umgebungsmodellvariablen abgelegt waren. Da die physikalischen Adressen der Umgebungsmodellvariablen auf der Konfigurationsvorrichtung bekannt waren und das Testmodell auf diese zugreifen konnte, konnte das Testmodell über die physikalischen Speicheradressen der Umgebungsmodellvariablen auf die Speicherorte zugreifen und die Inhalte dieser Speicherorte verändern, was zu einer Veränderung der Umgebungsmodellvariablen führte. Die Speicherorte der Umgebungsmodellvariablen waren dem Testmodell bekannt, da das Umgebungsmodell in der Regel auf der Konfigurationsvorrichtung konfiguriert und kompiliert, d. h. in ein lauffähiges Programm in maschinenlesbarem Code umgesetzt wurde. Während des Vorgangs der Kompilierung wurden die physikalischen Adressen der Speicherorte der Umgebungsvariablen festgelegt und aufgezeichnet, und das Testmodell konnte später in Kenntnis dieser Aufzeichnungen erstellt werden beziehungsweise zur Laufzeit diese Informationen auflösen. Die Aufzeichnungen über die Speicherorte der Umgebungsmodellvariablen wurden dazu auf der Konfigurationsvorrichtung abgelegt.

Da nach der technischen Lehre der europäischen Patentanmeldung mit der Anmeldenummer 06 018 945.3 das Testmodell jedoch auch auf der Testvorrichtung und nicht auf der Konfigurationsvorrichtung abläuft, ist ein Zugriff auf die Aufzeichnungen über die physikalischen Speicherorte der Umgebungsmodellvariablen nicht möglich.

D. h., dem Testmodell müssen die physikalischen Adressen mitgeteilt werden, unter welchen das Testmodell auf die Umgebungsmodellvariablen zugreifen kann, um die Umgebungsmodellvariablen zu manipulieren. Umgesetzt wurde dies dadurch, dass der Benutzer der Testvorrichtung bei der Erstellung des Testmodells auf der Konfigurationsvorrichtung die physikalischen Adressen der Umgebungsmodellvariablen von Hand in das Testmodell eingibt. Das Testmodell ist dann individuell an das Umgebungsmodell angepasst und zwar in der Form, wie es in der Testvorrichtung abläuft. Soll das Umgebungsmodell dagegen auf einer anderen Plattform zum Beispiel mit einem anderen Prozessortyp oder einer anderen Rechnerarchitektur ablaufen, werden bei der Kompilierung des Umgebungsmodells andere Speicherbereiche vorgesehen werden, in denen die Umgebungsmodellvariablen gespeichert werden. Deshalb ist bei der Verwendung einer anderen Plattform als Testvorrichtung eine Anpassung des Testmodells, insbesondere der im Testmodell eingegebenen physikalischen Speicheradressen der Umgebungsmodellvariablen notwendig. Es lässt sich somit festhalten, dass die Bekanntgabe der physikalischen Adressen der Speicherorte der Umgebungsvariablen in dem Testmodell mühsam, umständlich und zeitraubend ist und zu wenig flexibel verwendbaren Testmodellen führt.

Hier setzt die vorliegende Erfindung an.

Der vorliegenden Erfindung liegt das Problem zugrunde, eine Testvorrichtung so auszugestalten, bei der das Testmodell ohne mühsame manuelle Eingabe der physikalischen Adressen auf die Umgebungsvariablen beziehungsweise auf die Speicherorte der Umgebungsvariablen zugreifen kann, um die Umgebungsvariablen zu verändern. Dadurch ist ein Testmodell bereitstellbar, das einfacher zu konfigurieren und flexibler anwendbar ist. Ferner soll ein verbessertes Verfahren zum Betreiben einer Testvorrichtung bereitgestellt werden, bei dem die genannten Nachteile des Standes der Technik verringert oder vermieden werden.

Dieses Problem wird erfindungsgemäß durch eine Testvorrichtung zum Testen wenigstens eines elektronischen Steuerungssystems mit den Merkmalen des Patentanspruchs 1 gelöst , wonach
- die Testvorrichtung einen adressierbaren physikalischen Speicher aufweist,
- wobei die Testvorrichtung geeignet und eingerichtet ist über einen Datenkanal mit dem zu testenden Steuerungssystem in Verbindung gebracht zu werden, wenigstens ein Umgebungsmodell zu berechnen und wenigstens ein Testmodell auszuführen,
- wobei das Umgebungsmodell dazu eingerichtet ist, durch Ausgabe von Umgebungsmodelldaten an das Steuerungssystem und durch Aufnahme von Steuerungssystemdaten aus dem Steuerungssystem über den Datenkanal in Wechselwirkung mit dem Steuerungssystem zu stehen,
- wobei das Testmodell zur Beeinflussung des Umgebungsmodells, zur Beeinflussung der Berechnung des Umgebungsmodells und/oder zur Beeinflussung des elektronischen Steuerungssystems ausführbar ist,
- wobei das Umgebungsmodell unter anderem durch Umgebungsmodellvariablen beschrieben ist, die an Speicherorten in dem adressierbaren physikalischen Speicher unter festen physikalischen Adressen abgelegt sind,
- wobei die Testvorrichtung zur Änderung der Umgebungsmodellvariablen geeignet und eingerichtet ist,
- wobei die Testvorrichtung eine Einheit zum Zuordnen umfasst, in welcher die Zuordnung mindestens einer Umgebungsmodellvariablen zu mindestens einer zugeordneten physikalischen Adresse des Speichers lesbar abgelegt ist,
- wobei das Testmodell geeignet und eingerichtet ist zur Beeinflussung des Umgebungsmodells, zur Beeinflussung der Berechnung des Umgebungsmodells und/oder zur Beeinflussung des elektronischen Steuerungssystems die unter den physikalischen Adressen gespeicherten Werte der Umgebungsmodellvariablen zu ändern,
- wobei das Testmodell zumindest eine Funktion umfasst, um den Wert einer oder die Werte mehrerer Umgebungsmodellvariablen zu ändern,
und wobei mit der Funktion der Wert von mehreren Umgebungsmodellvariablen gleichzeitig, d. h. während eines Taktes des Umgebungsmodells änderbar sind.

Die Testvorrichtung umfasst eine Einheit zum Zuordnen, in welcher die Zuordnung aller oder eines Teils der Umgebungsmodellvariablen, insbesondere der Bezeichner der Umgebungsmodellvariablen zu den zugeordneten physikalischen Adressen des Speichers der Testvorrichtungen lesbar abgelegt ist. Die Zuordnung der Speicheradressen zu den Umgebungsmodellvariablen beziehungsweise den Bezeichnern ist somit auf der Testvorrichtung bekannt. Es ist damit nicht mehr erforderlich, dass in dem Testmodell die physikalischen Adressen eingegeben werden beziehungsweise bekannt sind. Es ist vielmehr ausreichend, wenn dem Testmodell die Bezeichner der Umgebungsmodellvariablen bekannt sind. Das Testmodell kann dann auf die Einheit zum Zuordnen zugreifen, um zu einer gegebenen Umgehungsmodellvariablen beziehungsweise zu einem Bezeichner einer Umgebungsmodellvariablen die physikalische Adresse in Erfahrung zu bringen.

Vorteilhafte Weiterbildungen der Testvorrichtung nach Anspruch 1 sind Gegenstand der abhängigen Patentansprüche.

Das Testmodell ist vorteilhaft geeignet und eingerichtet, die Zuordnung einer oder mehrer Umgebungsmodellvariablen zur zugeordneten physikalischen Adresse des Speichers aus der Einheit zum Zuordnen auszulesen. Das Testmodell ist ferner vorteilhaft geeignet und eingerichtet, zur Beeinflussung des Umgebungsmodells, zur Beeinflussung der Berechnung des Umgebungsmodells und/oder zur Beeinflussung des elektronischen Steuerungssystems, die unter den physikalischen Adressen gespeicherten Werte der Umgebungsmodellvariablen zu ändern. Das Testmodell umfasst dazu zumindest eine Funktion , mit welcher eine, mehrere oder alle Umgebungsmodellvariablen verändert werden können. Das Verändern der Umgebungsmodellvariablen mittels der Funktion kann gleichzeitig erfolgen, d. h., dass die Umgebungsmodellvariablen vorzugsweise zwar nacheinander aber während eines Takts des Umgebungsmodells verändert werden können. Bei der Simulation einer Umgebung mittels eines Umgebungsmodells wird dieses in Abhängigkeit von den an das Experiment gestellten Anforderungen zyklisch berechnet. Diese zyklische Berechnung des Umgebungsmodells erfolgt beispielsweise in einem Zeitschritt von einer Millisekunde. Abhängig von den Echtzeitanforderungen kann es aber beispielsweise auch erforderlich sein, die Umgebungsmodellberechnungen in kürzeren Zyklen auszuführen.
In der Funktion des Testmodells, mit welchem die Umgebungsmodellvariablen verändert werden können, kann eine Schleife vorgesehen sein, innerhalb der die den Umgebungsmodellvariablen zugeordneten Speicherorte zur Veränderung des Wertes der Umgebungsmodellvariablen adressiert werden. Mit anderen Worten können in den Testmodellen Routinen vorgesehen sein, mit denen eine große Anzahl von Umgebungsmodellvariablen nacheinander adressiert und verändert werden können.

Das Umgebungsmodell einer erfindungsgemäßen Testvorrichtung kann mehrere Funktionen umfassen, wobei diesen Funktionen Umgebungsmodellvariablen zugeordnet sind. Ferner kann dann vorgesehen sein, dass in der Einheit zum Zuordnen die Umgebungsmodellvariablen entsprechend ihrer Zugehörigkeit zu den Funktionen des Umgebungsmodells gegliedert angeordnet sind. Dadurch ist es möglich, eine übersichtlichere Anordnung der Umgebungsmodellvariablen und der physikalischen Adressen der Umgebungsmodellvariablen in der Einheit zum Zuordnen vorzusehen.

Sofern die Funktionen des Umgebungsmodells hierarchisch gegliedert sind, ist es möglich, dass in der Einheit zum Zuordnen die Umgebungsmodellvariablen entsprechend dieser Hierarchie gegliedert angeordnet sind, was zu einer weiteren Übersichtlichkeit der Einheit und der Anordnung der Umgebungsmodellvariablen und der physikalischen Adressen in der Einheit dient.

Die Umgebungsmodellvariablen weisen in der Regel einen Bezeichner auf. Dieser Bezeichner kann den Namen der Funktion umfassen, welcher der Umgebungsmodellvariablen zugeordnet ist. Aus dem Bezeichner könnte ebenso die Stellung der Funktion, zu der die Umgebungsmodellvariable zugeordnet ist, in der Hierarchie der Funktionen des Testmodells hervorgehen.

Vorteilhaft handelt es sich bei einer Einheit zum Zuordnen um eine Datei, es ist aber auch der Einsatz anderer bekannter Methoden und Vorrichtungen zum Speichern digitaler Daten denkbar, beispielsweise die Verwendung einer Datenbank oder eines flüchtigen Speichers. Das Testmodell einer erfindungsgemäßen Vorrichtung kann geeignet und eingerichtet sein, dass zum Beginn der Laufzeit des Testmodells die Einträge der Einheit zum Zuordnen gelesen und in einem dem Testmodell zugeordneten Speicherbereich abgelegt werden. Damit ist ein schneller Zugriff des Testmodells auf die physikalischen Adressen der Umgebungsmodellvariablen möglich.

Ebenso kann das Testmodell geeignet und eingereichtet sein, während der Laufzeit Einträge der Einheit zum Zuordnen zu lesen und in einem dem Testmodell zugeordneten Speicherbereich abzulegen.

Eine erfindungsgemäße Testvorrichtung kann mit einer Konfigurationsvorrichtung und gegebenenfalls mit einem Steuerungssystem zu einer Anordnung zusammengefasst sein. Die Konfigurationsvorrichtung ist dabei zur Erstellung, Änderung und/oder Erfassung von Umgebungsmodellen und/oder von Testmodellen geeignet und eingerichtet.

Die Anordnung kann einen Datenkanal aufweisen, über welchen die Testvorrichtung und die Konfigurationsvorrichtung miteinander verbunden sind.

Die Konfigurationsvorrichtung kann ferner geeignet und eingerichtet sein, die Zuordnung einer oder mehrerer Umgebungsmodellvariablen zur zugeordneten physikalischen Adresse des Speichers in die Einheit zum Zuordnen zu schreiben und/ oder diese Einheit zu erzeugen und/oder diese Einheit auf der Testvorrichtung abzulegen, so dass das Testmodell zu einem späteren Zeitpunkt, nämlich zur Laufzeit oder zu Beginn der Laufzeit auf diese Einheit zugreifen kann.

Die Konfigurationsvorrichtung kann ferner geeignet und eingerichtet sein, zur Beeinflussung des Umgebungsmodells und/oder zur Beeinflussung der Berechnung des Umgebungsmodells und/oder zur Beeinflussung des elektronischen Steuerungssystems jeweils unter den physikalischen Adressen gespeicherte Werte der Umgebungsmodellvariablen zu verändern, und zwar unmittelbar oder mittelbar unter Zwischenschaltung des Testmodells.

Ein Ausführungsbeispiel für eine Anordnung aus einer erfindungsgemäßen Testvorrichtung, einem Steuerungssystem und einer Konfigurationsvorrichtung ist anhand der Zeichnungen näher beschrieben. Es zeigt:

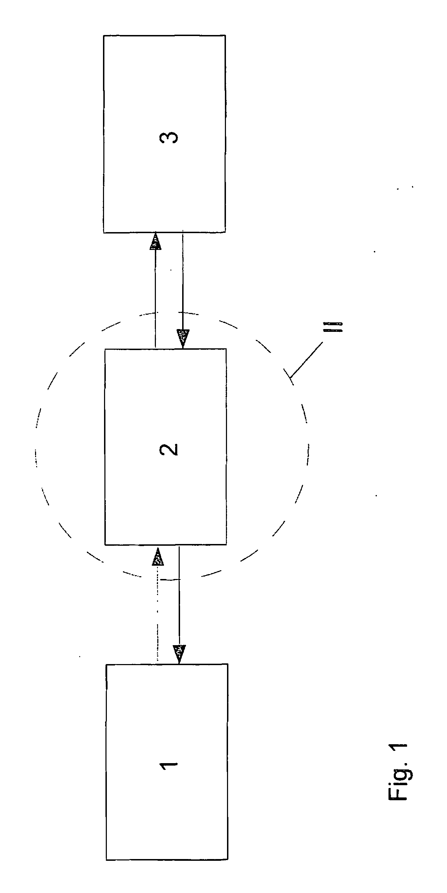

- Fig. 1: eine schematische Darstellung der Anordnung aus Steuerungssystem, Testvorrichtung und Konfigurationsvorrichtung,

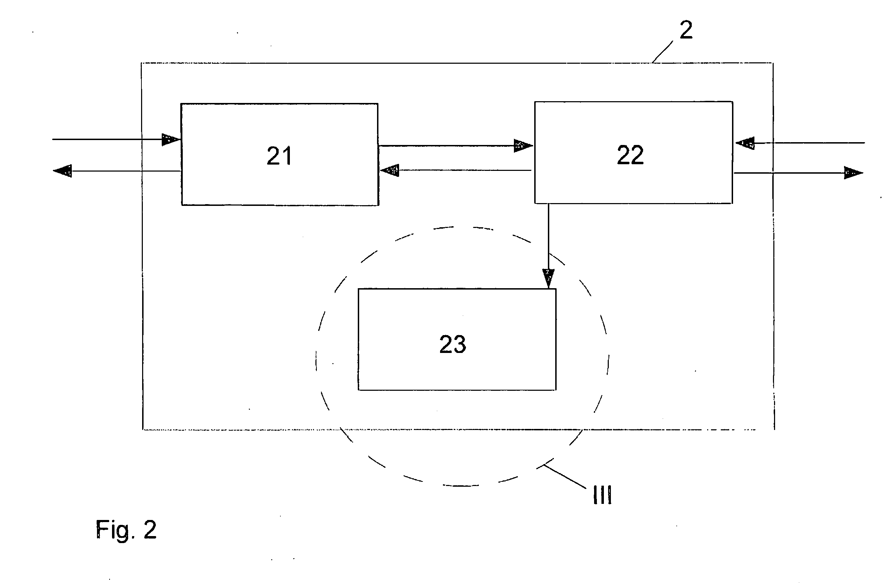

- Fig. 2: eine schematische Darstellung der Testvorrichtung und

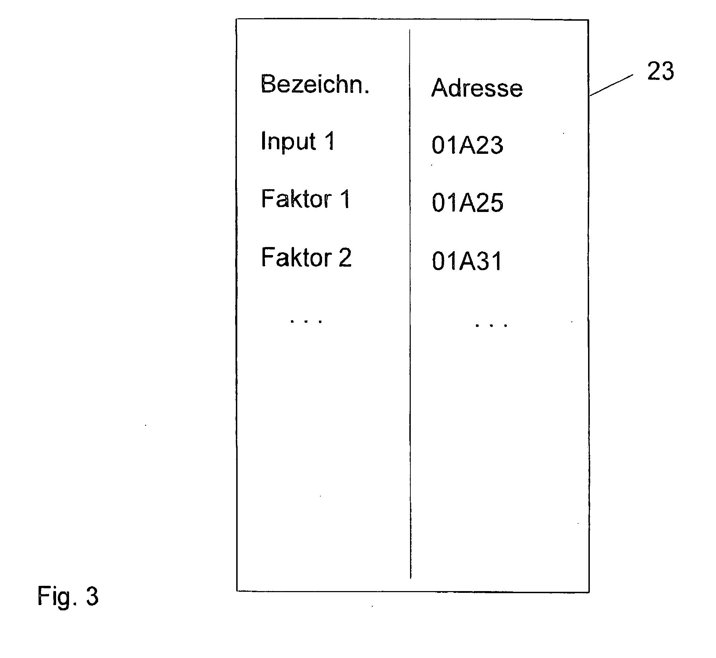

- Fig. 3: ein Beispiel für den Inhalt einer Einheit zum Zuordnen.

Eine erfindungsgemäße Anordnung weist ein Steuerungssystem 1 , eine Testvorrichtung 2 und eine Konfigurationsvorrichtung 3 auf.

Bei dem Steuerungssystem 1 handelt es sich um ein Steuergerät, wie es in Kraftfahrzeugen Verwendung findet. Derartige Steuergeräte werden beispielsweise eingesetzt, um einen Motor zu steuern. Auch andere Steuergeräte, wie zum Beispiel ein Klimaanlagensteuergerät könnten anstelle des Steuerungssystems 1 stehen. Das Steuerungssystem 1 soll mittels der Testvorrichtung 2 getestet werden und ist dazu mit der Testvorrichtung 2 über eine bidirektionale Schnittstelle verbunden, so dass Steuerungssystemdaten vom Steuerungssystem 1 zur Testvorrichtung 2 übertragen werden können und umgekehrt Daten von der Testvorrichtung 2 zum Steuerungssystem 1 übertragen werden können.

Bei der Testvorrichtung 2 handelt es sich um einen Rechner, auf welchem im Wesentlichen zwei Programme ablaufen. Es handelt sich dabei um ein Programm, welches ein Umgebungsmodell 21, und um ein zweites Programm, welches ein Testmodell 22 darstellt.

Das Umgebungsmodell 21 simuliert gegenüber dem Steuerungssystem 1 eine reale Einsatzumgebung des Steuerungssystems 1. Dem Steuerungssystem 1 werden durch das Umgebungsmodell 21 reale Einsatzbedingungen vorgespielt, wodurch es möglich ist, das Steuerungssystem 1 mittels des Umgebungsmodells 21 zu testen. Der eigentliche Test wird jedoch nicht von Umgebungsmodell 21 sondern von dem Testmodell 22 durchgeführt. Das Zusammenspiel zwischen Testmodell 22, Umgebungsmodell 21 und Steuerungssystem 1 ist in der europäischen Patentanmeldung mit der Anmeldenummer 06 018 945.3 näher beschrieben.

Die Konfigurationsvorrichtung 3, die über eine bidirektionale Schnittstelle mit der Testvorrichtung 2 verbunden ist, bildet die Schnittstelle der Anordnung zum Benutzer. Über die Konfigurationsvorrichtung 3 ist es dem Benutzer möglich, Einfluss auf das Umgebungsmodell 21, das Testmodell 22 und den Ablauf des Tests zu nehmen, sowie Testergebnisse sichtbar zu machen.

Die Konfigurationsvorrichtung 3 hat zunächst die Aufgabe, das Umgebungsmodell 21 zu erstellen, beziehungsweise ein vorbereitetes Umgebungsmodell 21 an das zu testende Steuerungssystem 1 anzupassen. Sofern das Umgebungsmodell 21 mittels einer geeigneten Software erstellt worden ist, wird das Umgebungsmodell 21 in einen maschinenlesbaren Code umgewandelt. Dieser Code wird dann auf die Testvorrichtung 2 gebracht, wo das Umgebungsmodell 21 dann später ausgeführt wird.

In ganz ähnlicher Weise wird der durchzuführende Test, d. h. das Testmodell 22 auf der Konfigurationsvorrichtung 1 gestaltet oder zusammengestellt. Auch das Testmodell 22 wird mittels einer geeigneten Software erstellt und in einen maschinenlesbaren Code umgewandelt. Auch dieser Code wird auf die Testvorrichtung 2 gebracht, wo das Testmodell 22 dann ausgeführt wird.

Damit es möglich ist, zur Laufzeit des Umgebungsmodells 21 verschiedene Umgebungsmodellvariablen 21 zu verändern, wird während der Kompilierung des Umgebungsmodells auf der Konfigurationsvorrichtung dafür gesorgt, dass die physikalischen Adressen der Speicherorte, in denen die Umgebungsmodellvariablen abgelegt werden, in einer Einheit zum Zuordnen der Variablen Bezeichner der Umgebungsvariablen zu den physikalischen Speicheradressen der Umgebungsvariablen abgelegt werden. Diese Einheit wird in Form einer Datei auf der Konfigurationsvorrichtung 3 angelegt. Damit mittels des Testmodells 22 auf die Umgebungsmodellvariablen zugegriffen werden kann und diese durch das Testmodell 22 während der Laufzeit der Tests verändert werden können, muss das Testmodell 22 in der Lage sein, die Einheit 23 zum Zuordnen der Variablenbezeichner zu den Speicheradressen zu lesen. Daher ist erfindungsgemäß diese Einheit 23 zum Zuordnen ebenfalls von der Konfigurationsvorrichtung 3 auf die Testvorrichtung 2 kopiert worden. Damit ist das Testmodell 22 zur Laufzeit in der Lage, die Speicheradressen der Umgebungsmodellvariablen herauszufinden. Das Testmodell 22 kann dann unmittelbar auf die Werte zugreifen und diese verändern. Ein Informationsaustausch zwischen dem Testmodell 22 und dem Umgebungsmodell 21 ist zum Verändern der Umgebungsmodellvariablen nicht notwendig.

Alternativ zu dem direkten Zugreifen des Testmodells 22 auf die gespeicherten Umgebungsmodellvariablen wäre es grundsätzlich auch denkbar, die Umgebungsmodellvariablen einschließlich ihrer Werte in einer oder mehreren separaten Dateien abzulegen, wobei sowohl das Umgebungsmodell 21 als auch das Testmodell 22 auf diese Dateien mit den darin gespeicherten Umgebungsmodellvariablen zugreifen könnte. Da solche Zugriffe meist Schreib- und Lesezugriffe auf derartige in Dateien gespeicherten Umgebungsmodellvariablen zeitlich sehr aufwändig sind, wurde die erfindungsgemäße Vorgehensweise gewählt, bei welcher das Testmodell 22 unmittelbar auf die im Bereich des Umgebungsmodells 21 gespeicherten Umgebungsmodellvariablen zur Manipulation zugreifen kann.

## Patentansprüche

1. Testvorrichtung (2) zum Testen wenigstens eines elektronischen Steuerungssystems (1),
- wobei die Testvorrichtung einen adressierbaren physikalischen Speicher aufweist,
- wobei die Testvorrichtung (2) geeignet und eingerichtet ist über einen Datenkanal mit dem zu testenden Steuerungssystem (1) in Verbindung gebracht zu werden, wenigstens ein Umgebungsmodell (21) zu berechnen und wenigstens ein Testmodell (22) auszuführen,
- wobei das Umgebungsmodell (21) dazu eingerichtet ist, durch Ausgabe von Umgebungsmodelldaten an das Steuerungssystem (1) und durch Aufnahme von Steuerungssystemdaten aus dem Steuerungssystem (1) über den Datenkanal in Wechselwirkung mit dem Steuerungssystem zu stehen,
- wobei das Testmodell (22) zur Beeinflussung des Umgebungsmodells (21), zur Beeinflussung der Berechnung des Umgebungsmodells (21) und/oder zur Beeinflussung des elektronischen Steuerungssystems (1) ausführbar ist,
- wobei das Umgebungsmodell (21) unter anderem durch Umgebungsmodellvariablen beschrieben ist, die an Speicherorten in dem adressierbaren physikalischen Speicher unter festen physikalischen Adressen abgelegt sind,
- wobei die Testvorrichtung (2) zur Änderung der Umgebungsmodellvariablen geeignet und eingerichtet ist,
- wobei die Testvorrichtung (2) eine Einheit (23) zum Zuordnen umfasst, in welcher die Zuordnung mindestens einer Umgebungsmodellvariablen zu mindestens einer zugeordneten physikalischen Adresse des Speichers lesbar abgelegt ist,
- wobei das Testmodell (22) geeignet und eingerichtet ist zur Beeinflussung des Umgebungsmodells (21), zur Beeinflussung der Berechnung des Umgebungsmodells (21) und/oder zur Beeinflussung des elektronischen Steuerungssystems (1) die unter den physikalischen Adressen gespeicherten Werte der Umgebungsmodellvariablen zu ändern,
- wobei das Testmodell (22) zumindest eine Funktion umfasst, um den Wert einer oder die Werte mehrerer Umgebungsmodellvariablen zu ändern,
**dadurch gekennzeichnet, dass** mit der Funktion der Wert von mehreren Umgebungsmodellvariablen gleichzeitig, d. h. während eines Taktes des Umgebungsmodells änderbar sind.

2. Testvorrichtung nach Anspruch 1, **dadurch gekennzeichnet, dass** die Funktion eine Schleife umfasst, innerhalb der wenigstens eine der Umgebungsmodellvariablen zugeordneter Speicherort adressiert wird.

3. Testvorrichtung nach Anspruch 2, **dadurch gekennzeichnet, dass** der Inhalt des adressierten Speicherorts geändert oder überschrieben wird.

4. Testvorrichtung nach einem der Ansprüche 1 bis 3, **dadurch gekennzeichnet, dass** das Umgebungsmodell (21) mehrere Funktionen umfasst, dass diesen Funktionen Umgebungsmodellvariablen zugeordnet sind und dass in der Einheit (23) zum Zuordnen die Umgebungsmodellvariablen entsprechend ihrer Zuordnung zu den Funktionen des Umgebungsmodells (21) gegliedert angeordnet sind.

5. Testvorrichtung nach Anspruch 4, **dadurch gekennzeichnet, dass** die Funktionen des Umgebungsmodell (21) hierarchisch gegliedert sind und dass in der Einheit (23) zum Zuordnen die Umgebungsmodellvariablen entsprechend dieser Gliederung angeordnet sind.

6. Testvorrichtung nach Anspruch 4 oder 5, **dadurch gekennzeichnet, dass** die Umgebungsmodellvariablen einen Bezeichner aufweisen und dass aus dem Bezeichner die Funktion hervorgeht, der die Umgebungsmodellvariable zugeordnet ist.

7. Testvorrichtung nach Anspruch 6, **dadurch gekennzeichnet, dass** aus dem Bezeichner die Stellung der Funktion, zu der die Umgebungsmodellvariable zugeordnet ist, in der Hierarchie der Funktionen hervorgeht.

8. Anordnung umfassend eine Testvorrichtung (2) und eine Konfigurationsvorrichtung (3), die zur Erstellung, Änderung und/oder Erfassung von Umgebungsmodellen (21), Testmodellen (22), Umgebungsmodellvariablen und/oder Testmodelldaten geeignet und eingerichtet ist, **dadurch gekennzeichnet, dass** die Testvorrichtung (2) nach einem der Ansprüche 1 bis 7 ausgebildet ist.

9. Anordnung nach Anspruch 8, **dadurch gekennzeichnet, dass** die Anordnung einen Datenkanal aufweist, über welchen die Testvorrichtung (2) und die Konfigurationsvorrichtung (3) miteinander verbunden sind.

10. Anordnung nach Anspruch 8 oder 9, **dadurch gekennzeichnet, dass** die Konfigurationsvorrichtung (3) geeignet und eingerichtet ist, die Zuordnung einer oder mehrerer Umgebungsmodellvariablen zur zugeordneten physikalischen Adresse des Speichers in der Einheit (23) zum Zuordnen abzulegen.

11. Anordnung nach Anspruch 10, **dadurch gekennzeichnet, dass** die Konfigurationsvorrichtung (3) geeignet und eingerichtet ist zur Beeinflussung des Umgebungsmodells (21), zur Beeinflussung der Berechnung des Umgebungsmodells (21) und/oder zur Beeinflussung des elektronischen Steuerungssystems (1) die unter den physikalischen Adressen gespeicherten Werte der Umgebungsmodellvariablen zu ändern.

12. Anordnung nach einem der Ansprüche 8 bis 11, **dadurch gekennzeichnet, dass** die Konfigurationsvorrichtung (3) eine Einheit zum Zuordnen umfasst, in welcher die Zuordnung aller oder eines Teils, insbesondere eines Bezeichners der Umgebungsmodellvariablen zu den zugeordneten physikalischen Adressen des Speichers lesbar abgelegt ist.

## Claims

1. A test device (2) for testing at least one electronic control system (1),
- wherein the test device has an addressable physical memory,
- wherein the test device (2) is suitable and equipped to be connected via a data channel to the control system (1) to be tested, to compute at least one environmental model (21), and to perform at least one test model (22),
- wherein the environmental model (21) is equipped to interact with the control system via the data channel by outputting environmental model data to the control system (1) and by receiving control system data from the control system (1),
- wherein the test model (22) is executable for influencing the environmental model (21), for influencing the computation of the environmental model (21), and/or for influencing the electronic control system (1),
- wherein the environmental model (21) is described, among others, by environmental model variables that are stored in memory locations in the addressable physical memory at fixed physical addresses,
- wherein the test device (2) is suitable and equipped for changing the environmental model variables,
- wherein the test device (2) comprises a unit (23) for assigning, in which the assignment of at least one environmental model variable to at least one assigned physical address of the memory is stored in a readable manner,
- wherein the test model (22) is suitable and equipped to change values of the environmental model variables stored at the physical addresses for influencing the environmental model (21), for influencing the computation of the environmental model (21) and/or for influencing the electronic control system (1),
- wherein the test model (22) comprises at least one function for changing the value of one or the values of several environmental model variables,
**characterized in that** using the function, the value of several environmental model variables can be changed simultaneously, i.e. during one cycle of the environmental model.

2. The test device according to claim 1, **characterized in that** the function comprises a loop within which at least one memory location assigned to environmental model variables is addressed.

3. The test device according to claim 2, **characterized in that** the content of the addressed memory location is changed or overwritten.

4. The test device according to one of the claims 1 to 3, **characterized in that** the environmental model (21) comprises multiple functions, that environmental model variables are assigned to these functions, and that in the unit (23) for assigning, the environmental model variables are disposed in a structured manner corresponding to their assignment to the functions of the environmental model (21).

5. The test device according to claim 4, **characterized in that** the functions of the environmental model (21) are structured hierarchically, and that the environmental model variables are disposed in the unit (23) for assigning according to this structure .

6. The test device according to claim 4 or 5, **characterized in that** the environmental model variables have an identifier, and that the function assigned to the environmental model variable arises from the identifier.

7. The test device according to claim 6, **characterized in that** position of the function to which the environmental model variable is assigned, in the hierarchy of the functions, arises from the identifier.

8. An arrangement comprising a test device (2) and a configuration device (3) suitable and equipped for creating, changing, and/or capturing environmental models (21), test models (22), environmental model variables and/or test model data, **characterized in that** the test device (2) is implemented according to one of the claims 1 to 7.

9. The arrangement according to claim 8, **characterized in that** the arrangement has a data channel via which the test device (2) and the configuration device (3) are connected together.

10. The arrangement according to claim 8 or 9, **characterized in that** the configuration device (3) is suitable and equipped to store the assignment of one or more environmental model variables to the assigned physical addresses of the memory in the unit (23) for assigning.

11. The arrangement according to claim 10, **characterized in that** the configuration device (3) is suitable and equipped to change values of the environmental model variables stored at the physical addresses for influencing the environmental model (21), for influencing the computation of the environmental model (21), and/or for influencing the electronic control system (1).

12. The arrangement according to one of the claims 8 to 11, **characterized in that** the configuration device (3) comprises a unit for assigning, in which the assignment of all or a part, particularly of an identifier of the environmental model variables to the assigned physical addresses of the memory is stored in a readable manner.

## Revendications

1. Dispositif de test (2) pour tester au moins un système de commande électronique (1),
- sachant que le dispositif de test comporte une mémoire physique adressable,
- sachant que le dispositif de test (2) est adapté et configuré pour être mis en relation avec le système de commande (1) à tester via un canal de données, calculer au moins un modèle d'environnement (21) et exécuter au moins un modèle de test (22),
- sachant que le modèle d'environnement (21) est configuré pour être en interaction avec le système de commande par extraction de données de modèle d'environnement vers le système de commande (1) et réception de données de système de commande depuis le système de commande (1), via le canal de données,
- sachant que le modèle de test (22) peut être exécuté pour influencer le modèle d'environnement (21), influencer le calcul du modèle d'environnement (21) et/ou influencer le système de commande électronique (1),
- sachant que le modèle d'environnement (21) est décrit entre autres par des variables de modèle d'environnement, qui sont enregistrées à des emplacements de mémorisation dans la mémoire physique adressable, à des adresses physiques fixes,
- sachant que le dispositif de test (2) est adapté et configuré pour la modification des variables de modèle d'environnement,
- sachant que le dispositif de test (2) comporte une unité (23) pour l'attribution, dans laquelle est enregistrée de manière lisible l'attribution d'au moins une variable de modèle d'environnement à au moins une adresse physique dédiée de la mémoire,
- sachant que le modèle de test (22) est adapté et configuré pour influencer le modèle d'environnement (21), influencer le calcul du modèle d'environnement (21) et/ou influencer le système de commande électronique (1) pour modifier les valeurs des variables de modèle d'environnement mémorisées aux adresses physiques,
- sachant que le modèle de test (22) comprend au moins une fonction pour modifier la valeur d'une variable de modèle d'environnement ou les valeurs de plusieurs variables de modèle d'environnement,
**caractérisé en ce qu'**avec la fonction, les valeurs de plusieurs variables de modèle d'environnement peuvent être modifiées simultanément, c'est-à-dire durant un cycle du modèle d'environnement.

2. Dispositif de test selon la revendication 1, **caractérisé en ce que** la fonction comprend une boucle, au sein de laquelle est adressé au moins un emplacement de mémorisation attribué à la variable de modèle d'environnement.

3. Dispositif de test selon la revendication 2, **caractérisé en ce que** le contenu de l'emplacement de mémorisation adressé est modifié ou écrasé par sur-écriture.

4. Dispositif de test selon l'une des revendications 1 à 3, **caractérisé en ce que** le modèle d'environnement (21) comprend plusieurs fonctions, que des variables de modèle d'environnement sont attribuées à ces fonctions et que dans l'unité (23) pour l'attribution, les variables de modèle d'environnement sont disposées de manière structurée selon leur attribution aux fonctions du modèle d'environnement (21).

5. Dispositif de test selon la revendication 4, **caractérisé en ce que** les fonctions du modèle d'environnement (21) sont classées hiérarchiquement et que dans l'unité (23) pour l'attribution, les variables de modèle d'environnement sont disposés suivant cette structuration.

6. Dispositif de test selon la revendication 4 ou 5, **caractérisé en ce que** les variables de modèle d'environnement présentent un identificateur et que de cet identificateur découle la fonction à laquelle est attribuée la variable de modèle d'environnement.

7. Dispositif de test selon la revendication 6, **caractérisé en ce que** de l'identificateur ressort la position de la fonction à laquelle est attribuée la variable de modèle d'environnement, dans la hiérarchie des fonctions.

8. Arrangement comportant un dispositif de test (2) et un dispositif de configuration (3) qui est adapté et configuré pour créer, modifier et/ou acquérir des modèles d'environnement (21), des modèles de test (22), des variables de modèle d'environnement et/ou des données de modèle de test, **caractérisé en ce que** le dispositif de test (2) se présente sous une forme selon l'une quelconque des revendications 1 à 7.

9. Arrangement selon la revendication 8, **caractérisé en ce que** l'arrangement présente un canal de données, via lequel sont reliés l'un avec l'autre le dispositif de test (2) et le dispositif de configuration (3).

10. Arrangement selon la revendication 8 ou 9, **caractérisé en ce que** le dispositif de configuration (3) est adapté et approprié pour enregistrer l'attribution d'une ou de plusieurs variables de modèle d'environnement à l'adresse physique dédiée de la mémoire dans l'unité (23) pour l'attribution.

11. Arrangement selon la revendication 10, **caractérisé en ce que** le dispositif de configuration (3) est adapté et configuré pour influencer le modèle d'environnement (21), influencer le calcul du modèle d'environnement (21) et/ou influencer le système de commande électronique (1) pour modifier les valeurs des variables de modèle d'environnement mémorisées aux adresses physiques.

12. Arrangement selon l'une quelconque des revendications 8 à 11, **caractérisé en ce que** le dispositif de configuration (3) comporte une unité pour l'attribution, dans laquelle est enregistrée de manière lisible l'attribution de toutes ou d'une partie, particulièrement d'un identificateur des variables de modèle d'environnement, aux adresses physiques dédiées de la mémoire.
